# EUROPÄISCHE PATENTSCHRIFT

(11) **EP 2 013 291 B1**
(45) Veröffentlichungstag und Bekanntmachung des Hinweises auf die Patenterteilung: **02.05.2012**
(21) Anmeldenummer: 07718392.9
(22) Anmeldetag: 17.04.2007
(51) Int. Cl.: C08H 1/06, C08L 89/06

(54) **LEDERWERKSTOFF**
LEATHER MATERIAL
MATÉRIAU À BASE DE CUIR

(30) Priorität: 25.04.2006 AT 6982006; 23.11.2006 AT 19422006
(43) Veröffentlichungstag der Anmeldung: 14.01.2009
(73) Patentinhaber: Stoll, Rémy, 8010 Graz (AT)
(72) Erfinder: Stoll, Rémy, 8010 Graz (AT)
(74) Vertreter: Gibler & Poth Patentanwälte OG
(86) Internationale Anmeldenummer: PCT/AT2007/000176
(87) Internationale Veröffentlichungsnummer: WO 2007/121497

(56) Entgegenhaltungen:
- EP-A- 0 089 029
- EP-A2- 0 256 663
- EP-A2- 0 421 450
- DE-A1- 4 223 703
- DE-A1- 10 060 246
- US-A- 4 497 871

## Beschreibung

Die Erfindung betrifft einen Lederwerkstoff gemäß dem Anspruch 1.

Bei der herkömmlichen Lederherstellung fallen während der einzelnen Produktionsstufen Reststoffe verschiedenster Art in beträchtlichen Mengen an. Es wurde bereits mehrfach angeregt, diese Reststoffe einer sinnvollen Weiterverwendung zuzuführen und damit wieder einen verwertbaren Werkstoff herzustellen. Dazu ist es bekannt geworden, diese Reststoffe zu zerkleinern und ähnlich wie bei der Papierherstellung in einem nassen Verfahren in großen Becken mit einem Bindemittel zu versetzen. Bei diesem Herstellungsprozess fallen große Mengen an verschmutztem Wasser an. Zusätzlich ist die so hergestellte Platten- und Rollenware nur in einem aufwendigen, mehrstufigen Umformprozess zu 3-dimensionalen Schalen formbar. Komplexere 3-dimensionale Körper können daraus nur mit spanabhebenden Arbeitsschritten hergestellt werden. Erst das Endprodukt, das daraus hergestellte, lederähnliche, flächige Formteil kann gelagert, verpackt und wirtschaftlich transportiert werden. Dieses Endprodukt kann aber nicht mehr in seinen Eigenschaften verändert werden und ist daher in seiner Anwendung zur Herstellung unterschiedlicher weiterer Produkte sowie zur Weiterverarbeitung stark eingeschränkt.

Die US 4 497 871 A zeigt eine Platte umfassend den Lederwerkstoff mit einem tragendem Gewebe, wobei das tragendem Gewebe beidseitig mit dem mit dem Lederwerkstoff überzogen ist.

Die EP 0 421 450 A2 behandelt ein Kollagenpulver und die Verarbeitung des Kollagenpulvers zu einem lederähnlichen Werkstoff.

Die EP 089 029 A2 behandelt ebenfalls die Herstellung eines plattenförmigen Lederwerkstoffes.

Die DE 100 60 246 A1 zeigt ein Verfahren zur Verarbeitung von Tiermehl und organischen Reststoffen zu Lederfaser-Verbundwerkstoffen.

Die DE 42 23 703 A1 wiederum zeigt Formteile mit lederartigen Oberflächeneigenschaften. Die EP 0 256 663 A2 lehrt die Dampfbehandlung und Pulverisation von Lederabfällen.

Ein weiterer Nachteil der bekannten Verfahren besteht darin, dass die Lederbestandteile bei der Herstellung der Plattenware ausgerichtet werden und die Platten daher anisotrope Materialien aufweisen, welche die industrielle Weiterverarbeitung behindern.

Die vorliegende Erfindung hat daher zur Aufgabe, einen Lederwerkstoffs aus verschiedensten Reststoffen, die bei der Lederproduktion oder bei der Lederverarbeitung anfallen, bereitzustellen, der leicht herstellbar, lagerfähig und insbesondere wirtschaftlich transportierbar ist. Er soll darüber hinaus auch besonders leicht und automatisiert weiterverarbeitbar und noch in viele verschiedene Ausführungsformen und Erscheinungsbilder formbar sein.

Diese Aufgabe wird die Merkmale des Anspruches 1 gelöst.

Unter thermisch unbelastet soll hierbei insbesondere verstanden werden, dass keine Temperaturbehandlung über 120°C durchgeführt wurde. Bisher wurden über 120°C liegende Temperaturen nötig, um den Werkstoff für eine Weiterverarbeitung plastisch verformen zu können. Durch die Beigabe eines Lösungsmittels im Produktionsprozess, nämlich beim Mischen der Fasern mit dem Bindemittel, kann auf Temperaturen über 120°C verzichtet werden, wodurch die Fasern thermisch unbelastet sind und vor thermischem Abbau bewahrt werden können. Die Mischung der Fasern und des Bindemittels mithilfe eines Lösungsmittels gestattet Verarbeitungstemperaturen in einem Bereich von 10° bis 120°C, vorzugsweise zwischen 50°C und 100°C.

Dadurch dass der Werkstoff als im Wesentlichen lösungsmittelfreies, vorzugsweise stranggepresstes, Extrudat vorliegt, ist es möglich, den Werkstoff als ungefährliches Gut über weite Strecken problemlos und günstig zu transportieren. Da das Extrudat im Wesentlichen lösungsmittelfrei ist, sind dabei keine diesbezüglichen Vorschriften zu beachten.

Bevor der Werkstoff extrudiert werden kann, müssen die Rezepturbestandteile zu einer fließfähigen Masse verarbeitet werden. Dies geschieht besonders vorteilhaft mittels eines das Bindemittel sehr gut lösenden Lösungsmittels, beispielsweise eines niedrig siedenden Ketons wie 2-Butanon (Methyl-Ethyl-Keton, MEK). Dadurch wird das Bindemittel gelöst und gleichmäßig auf den Lederfasern verteilt. Während oder nach dem Extrudieren wird das Lösungsmittel dann wieder von dem Werkstoff entfernt, insbesondere ausgetrieben. Es ergibt sich überdies eine besonders gute Verarbeitbarkeit und Transportfähigkeit des Werkstoffes. Das Bindemittel verbleibt in seiner feinen Verteilung zwischen den Lederfasern in dem Werkstoff. Ein derart fein dispergiertes Bindemittel bewirkt besonders vorteilhafte Materialeigenschaften des Werkstoffs, wie insbesondere homogene mechanische Eigenschaften und ein homogenes Erscheinungsbild. Dennoch bleiben wichtige Eigenschaften von echtem Leder bestehen, wie zum Beispiel die Anmutung natürlichen Leders.

Durch die Verarbeitung über ein Lösungsmittel sind die einzelnen Lederbestandteile besonders gleichmäßig im Werkstoff verteilt. Dies ergibt ausgewogene Materialeigenschaften, welche wiederum die industrielle Weiterverarbeitung günstig beeinflussen.

Ein Strang dieser Dimensionen lässt sich als Extrudat leicht herstellen und die Lösungsmittelbestandteile lassen sich daraus besonders leicht entfernen.

Dieses Granulat hat den Vorteil, dass es besonders gut verpackt und transportiert werden kann. Insbesondere ist es riesel- und lagerfähig und kann in automatisierten Dosierungs- und Förderprozessen eingesetzt werden.

Dies ermöglicht ein möglichst naturgetreues Aussehen des Lederwerkstoffs.

Gemäß einer vorteilhaften Ausführung können die Fasern eine Länge von etwa 0,1 bis 20 mm, vorzugsweise von etwa 2 bis 10 mm, insbesondere etwa 5 mm aufweisen. Dabei entsteht ein besonders gleichmäßiger Werkstoff, der dennoch den natürlichen Griff und das Erscheinungsbild echten Leders aufweist.

Besonders vorteilhaft ist es, wenn der Werkstoff weitere Stoffe, insbesondere einen Weichmacher, ein Formentrennmittel, eine Fettemulsion, ein Pigment, einen Füllstoff, ein Blähmittel, einen Stabilisator, einen Farbstoff, einen Duftstoff, ein Hydrophobierungsmittel, eine ölabweisende Komponente, eine schmutzabweisende Komponente und/oder eine bakterizide Substanz enthält. Dadurch können die Eigenschaften des Lederwerkstoffs weiter, insbesondere auf seinen Einsatzzweck, abgestimmt werden.

Die Erfindung betrifft weiters ein Lederwerkstück, das zumindest bereichsweise aus einem oben beschriebenen Lederwerkstoff gebildet ist. Dadurch können die oben beschriebenen Vorteile des Lederwerkstoffes auch bei dem Lederwerkstück bereitgestellt werden.

In Weiterbildung der Erfindung kann vorgesehen werden, dass es eine aufgeraute Oberfläche aufweist. Durch die aufgeraute Oberfläche kann der Eindruck einer Rauhlederoberfläche erreicht werden, welche einen angenehmen und feinen Griff aufweist. Wasser und Feuchtigkeit werden von dem Lederwerkstück verstärkt aufgenommen.

Gemäß einer weiteren Ausgestaltung der Erfindung kann vorgesehen werden, dass es eine Einlageform umfasst. Die Einlageform kann in das Lederwerkstück eingebettet sein, wodurch der Materialbedarf an Lederwerkstoff gering gehalten werden kann- Weiters kann mit der Einlageform die physikalischen Eigenschaften des Lederwerkstückes verändert werden, beispielsweise eine hohe Stabilität erreicht werden. Mit der Einlageform kann ein Grundgerüst eines dreidimensionalen Lederwerkstückes bereitgestellt werden.

In weiterer Ausbildung der Erfindung kann vorgesehen sein, dass wenigstens an einer Seite eine hydrophobierende Beschichtung und/oder Imprägnierung angebracht ist, wodurch wenigstens eine Seite auf einfache Weise wasserabweisend ausgebildet werden kann.

Die Erfindung betrifft auch ein Verfahren zur Verarbeitung von Lederbestandteilen, insbesondere von Ausgangs-, End- Zwischen- und/oder Nebenprodukten der Ledererzeugung, wie z.B. Falzspäne, Spaltabfälle, Stanzgitter und/oder Schleifstaub, wobei im gesamten Verfahren eine Temperatur von 120°C nicht überschritten wird.

Wie bereits ausgeführt, haben die bekannten Verfahren zur Verarbeitung von Abfallstoffen der Lederproduktion Nachteile, insbesondere in Hinblick auf die Umweltverträglichkeit der Verarbeitungsprozesse, der Temperaturbelastung der Lederanteile im Verarbeitungsprozess, der Lager- und Transportfähigkeit der Zwischenprodukte, der plastischen Formbarkeit der Endprodukte und der Automatisierbarkeit der nachfolgenden Verarbeitungsschritte.

Die Erfindung hat daher auch die Aufgabe, ein Verfahren anzugeben, mit dem ein Lederwerkstoff aus verschiedensten Reststoffen, die bei der Lederproduktion anfallen, bereitgestellt werden kann, der leicht herstellbar, lagerfähig und insbesondere wirtschaftlich transportierbar ist. Der so hergestellte Werkstoff soll darüber hinaus auch besonders leicht weiterverarbeitbar und noch in viele verschiedene Ausführungsformen und Erscheinungsbilder formbar sein.

Diese Aufgabe wird erfindungsgemäß dadurch gelöst, dass das Verfahren folgende Schritte umfasst:
- Bilden von Fasern aus den Lederbestandteilen,
- Beimengen von zumindest einem Bindemittel, wobei als Bindemittel ein thermoplastisches Polymer, insbesondere ein Polyurethan, bevorzugte ein lösliches Polyurethangranulat, verwendet wird,
- Beimengen von zumindest einem Lösungsmittel zum Lösen des Bindemittels,
- Extrudieren des Gemisches durch einen Extruder, insbesondere einen Schneckenextruder oder einen Kolbenextruder, zu einem Strang von 0,5 bis 15 mm, vorzugsweise 1 bis 5 mm, insbesondere 1,5 mm Durchmesser,
- Entfernen des Lösungsmittels, sodass ein Halbzeug aus einem im Wesentlichen lösungsmittelfreien Extrudat entsteht.

Dadurch ist es möglich, auf hohe Verarbeitungstemperaturen zu verzichten, wodurch die Fasern in dem so erzeugten Werkstoff thermisch unbelastet sind. Die Verarbeitungstemperatur kann dabei in einem Bereich von 10°C bis 120°C, vorzugsweise zwischen 50°C und 100°C, liegen. Dadurch bleiben die Lederfasern sicher vor thermischem Abbau bewahrt.

Der so erzeugte Werkstoff kann als ungefährliches Gut über weite Strecken problemlos und günstig transportiert werden. Da das Extrudat im Wesentlichen lösungsmittelfrei ist, sind dabei keine diesbezüglichen Vorschriften zu beachten. Durch die Beimengung eines Lösungsmittels, das im Laufe des Verfahrens wieder entfernt wird, können die außergewöhnlich guten und oben für den Werkstoff beschriebenen Materialeigenschaften erreicht werden. Insbesondere verbleibt das Bindemittel in seiner feinen Verteilung zwischen den Lederfasern in dem Werkstoff. Ein derart fein dispergiertes Bindemittel bewirkt ein besonders homogenes Erscheinungsbild des Werkstoffs und der damit hergestellten Produkte. Dennoch bleiben wichtige Eigenschaften der Lederfasern bestehen, wie zum Beispiel die Anmutung natürlichen Leders.

Dieses Extrudieren kann durch geeignete Mengen an Lösungsmittel besonders wirtschaftlich eingestellt werden. In Abhängigkeit des Anteils an Lösungsmittel, des gewählten Bindemittels, der Menge an Bindemittel, der gewählten Weichmacher und der Verarbeitungstemperatur ist das Gemisch mehr oder weniger viskos. Bei einer niedrigen Viskosität wird zum Extrudieren entsprechend weniger Druck benötigt. Ist die Viskosität allerdings zu niedrig, lässt sich das Extrudat nicht mehr leicht handhaben. Als geeignete Menge Lösungs- und Bindemittel ist daher jene anzusehen, bei welcher sich eine gute Handhabbarkeit des Extrudats ergibt, wobei allerdings wichtige Prozessparameter wie insbesondere Druck und Geschwindigkeit optimal und kostengünstig gewählt werden können. Dies ermöglicht ein möglichst naturgetreues Aussehen des Lederwerkstoffs.

Gemäß einer bevorzugten Ausführung kann - in dem Verfahrensschritt des Entfernens des Lösungsmittels - das Extrudat getrocknet werden. Das so erhaltene trockene Extrudat ist besonders einfach zu handhaben und leicht lager- und transportfähig.

Der Strang kann besonders leicht und genau zur Weiterverarbeitung dosiert werden. Zur Lagerung kann er beispielsweise aufgewickelt werden.

Vorteilhafterweise können - in dem Verfahrensschritt des Bildens von Fasern aus den Lederbestandteilen - Fasern mit einer Länge von 0,1 bis 20 mm, vorzugsweise von 2 bis 10 mm, insbesondere 5 mm gebildet werden. Die Durchmesser der Fasern können im Bereich von 10 nm bis 10 µm, vorzugsweise mit einer Häufung der Durchmesser im Bereich von 2 µm bis 10 µm und 10 nm bis 200 nm, insbesondere rund um 5 µm und 100nm. Dabei entsteht ein besonders gleichmäßiger Werkstoff, der dennoch den natürlichen Griff und das Erscheinungsbild echten Leders aufweist.

Insbesondere können Fasern mit einem Durchmesser von 3 bis 8 µm und einer Länge von bis zu 10 mm und Fasern mit einem Durchmesser von 50 bis 500 nm gebildet werden.

In bevorzugter Ausführung kann - in dem Verfahrensschritt des Beimengens von zumindest einem Bindemittel - das Bindemittel trocken, beispielsweise als Granulat oder Pulver, vorliegen und mit den Fasern aus den Lederbestandteilen trocken vermischt werden. Dadurch kann das Bindemittel besonders leicht und dennoch gleichmäßig unter die Fasern gemischt werden. Als ein mögliches Beispiel für ein derartiges Bindemittel sei ein lösliches Polyurethangranulat erwähnt.

Bei dem erfindungsgemäßen Verfahren kann in besonders vorteilhafter Weise - in dem Verfahrensschritt des Beimengens von zumindest einem Lösungsmittel - das Bindemittel vollständig gelöst werden, so dass dabei eine im Wesentlichen homogene Masse gebildet wird. Schon durch das teilweise, noch besser aber durch das völlige Auflösen des Bindemittels kann sichergestellt werden, das die so entstehende Masse in sich homogen ist. Der daraus hergestellte Lederwerkstoff hat daher nicht nur ein einheitliches Erscheinungsbild, sondern auch gleich gute Materialeigenschaften in allen Richtungen des Materials.

Gemäß einer weiteren Ausführung kann der Werkstoff zu einem flächenförmigen Werkstoff gewalzt werden. Dadurch steht der Werkstoff bereits als flächiges Zwischenprodukt zur Verfügung und muss bei einer Weiterverarbeitung zu einem flächigen Endprodukt nicht mehr großflächig gewalzt werden.

Besonders bevorzugt ist es, wenn - vor, nach oder während des Verfahrensschritts des Entfernens des Lösungsmittels - das Extrudat granuliert wird. Als Granulat ist der Werkstoff besonders einfach zu handhaben. Er kann insbesondere leicht transportiert und durch einfaches Schütten umgefüllt und dosiert werden.

In diesem Zusammenhang kann vorgesehen sein, dass bei dem Granulieren ein Granulat gebildet wird, welches kurze Stücke mit einer Länge, von 1 bis 20 mm, vorzugsweise 2 bis 10 mm, insbesondere 5 mm, aufweist. Ein Granulat dieser Körnung hat besonders vorteilhafte Eigenschaften im Hinblick auf Transportierfähigkeit und Handhabung. Weiters wird ein solches Granulat leicht von gebräuchlichen Transportschnecken aufgenommen und weiterbefördert. Es eignet sich besonders für eine automatisierte Weiterverarbeitung.

Als Lösungsmittel kann beispielsweise ein 2-Butanon (Methyl-Ethyl-Keton, MEK) oder ein Aceton verwendet werden. Diese Lösungsmittel können das Bindemittel sehr gut lösen, wodurch sich eine besonders feine Verteilung von Fasern und Bindemittel ergibt. Es könnte alternativ auch ein anderes Lösungsmittel zum Einsatz kommen, welches das Bindemittel sehr gut löst.

Es können dem Gemisch vor dem Extrudieren weitere Stoffe, insbesondere ein Weichmacher, ein Formentrennmittel, eine Fettemulsion, ein Pigment, ein Füllstoff, ein Blähmittel, ein Stabilisator, ein Farbstoff und/oder ein Duftstoff, beigemengt werden. Dadurch können die Eigenschaften des Lederwerkstoffs weiter, insbesondere auf seinen Einsatzzweck, abgestimmt werden.

Besonders vorteilhaft ist es, wenn das Lösungsmittel rückgewonnen und im Kreislauf geführt wird. Dadurch kann das Lösungsmittel immer wieder verwendet werden, wodurch der Rohstoffeinsatz minimiert wird. Darüber hinaus ist das Verfahren umweltfreundlicher.

Besonders vorteilhaft ist es, wenn zumindest ein Verfahrensschritt des Verfahrens, insbesondere das Extrudieren des Gemisches, bei einer Temperatur zwischen 10°C und 120°C, vorzugsweise zwischen 50°C und 100°C, durchgeführt wird. Dadurch wird die industrielle Herstellung begünstigt und dennoch die Fasern geschont, insbesondere keiner thermischen Belastung ausgesetzt.

Die Erfindung betrifft weiters ein Verfahren zur Herstellung eines Lederwerkstückes, wobei ein oben beschriebener Lederwerkstoff verwendet wird. Durch die Verwendung eines oben beschriebenen Lederwerkstückes können die Eigenschaften des Lederwerkstoffes bei dem Lederwerkstück bereitgestellt werden.

In weiterer Ausgestaltung der Erfindung kann vorgesehen sein, dass der Lederwerkstoff in einem Extrusions- oder Spritzgussprozess verarbeitet wird und anschließend die Oberfläche aufgeraut wird, insbesondere mittels einer Bürste, einem Schleifmittel und/oder abrasiven Teilen in einem Schüttel- oder Rüttelgefäß. Durch die aufgeraute Oberfläche kann der Eindruck einer Rauhlederoberfläche erreicht werden, welche einen angenehmen und feinen Griff aufweist. Wasser und Feuchtigkeit werden von dem Lederwerkstück verstärkt aufgenommen.

In Weiterführung der Erfindung kann vorgesehen sein, dass das Lederwerkstück nach dem Extrusions- oder Spritzgussprozess die Steifigkeit des Lederwerkstückes reduziert wird, wobei das Lederwerkstück über eine Reihe von Umlenkrollen, insbesondere von glatten oder gewellten Umlenkrollen, geführt wird und/oder das Lederwerkstück über eine Kante oder Klinge gezogen wird und/oder das Lederwerkstück trocken in einer Trommel gewalkt wird. Dadurch kann die Verformbarkeit des Lederwerkstückes erhöht und ein weicherer Griff erzielt werden. Beispielsweise können bei dem Beziehen von Gegenständen mit dem Lederwerkstück engere Krümmungsradien des Gegenstandes mit dem Bezug nachgebildet werden.

Gemäß einer weiteren Ausführungsform der Erfindung kann vorgesehen sein, dass mit dem Extrudat eine Einlageform umspritzt wird. Die Einlageform kann in das Lederwerkstück eingebettet sein, wodurch der Materialbedarf an Lederwerkstoff gering gehalten werden kann. Weiters kann mit der Einlageform die physikalischen Eigenschaften des Lederwerkstückes verändert werden, beispielsweise eine hohe Stabilität erreicht werden. Mit der Einlageform kann ein Grundgerüst eines dreidimensionalen Lederwerkstückes bereitgestellt werden.

In weiterer Ausgestaltung der Erfindung kann vorgesehen sein, dass in dem Extrudat und/oder neben dem Extrudat hydrophobierende Bestandteile hinzugefügt werden. Mit den hydrophobierenden Bestandteilen kann die Wasseraufnahmeneigung des Lederwerkstückes beeinflusst und an einen vorgebbaren Verwendungszweck angepasst werden.

Gemäß einer weiteren Ausbildung der Erfindung kann vorgesehen werden, dass das Lederwerkstück auf wenigstens einer Seite mit hydrophobierenden Mitteln beschichtet und/oder imprägniert wird, wodurch wenigstens eine Seite auf einfache Weise wasserabweisend ausgebildet werden kann.

Im Folgenden werden der neue Lederwerkstoff sowie dessen Verfahren zur Herstellung und Weiterverarbeitung anhand von exemplarischen Ausführungsbeispielen näher erläutert.

Als Ausgangsmaterial für den erfindungsgemäßen Lederwerkstoff können Abfallstoffe oder Nebenprodukte aus der Lederproduktion eingesetzt werden. Insbesondere sei dabei an Falzspäne, Spaltabfall, Stanzgitter, Schleifstaub, etc. gedacht, die aus unterschiedlichen Stufen der Lederproduktion stammen.

Falzspäne fallen in der Lederproduktion an, wenn nach den ersten Gerbstufen die Rückseite der Haut mit rotierenden Messern von losen Haut- und Fleischresten gesäubert werden. Sie fallen in großen Mengen an und sind noch ungefärbt. Allerdings liegen sie meist nass vor und enthalten ungegerbte oder nicht fertig gegerbte Anteile. Zur Herstellung des erfindungsgemäßen Lederwerkstoffes müssen die Falzspäne daher zuerst fertig gegerbt und gegebenenfalls rückgefettet werden. Vor der Weiterverarbeitung sollen die Falzspäne getrocknet werden. Das Wasser kann über Siebe abgesaugt und/oder in Trockenschränken abgedampft werden.

Spaltabfall fällt in großen Stücken beim sogenannten Spalten an. Dieses ist notwendig, da die fertig gegerbte Haut nicht überall gleich dick ist. Beim Spalten wird die Haut auf die gewünschte Dicke gebracht. Der Überstand auf der Fleischseite ist der Spaltabfall. Dieser ist bereits fertig gegerbt, trocken und fällt in großen Mengen an. Er ist ein homogenes Material und ohne Zurichtung, das heißt ohne Beschichtung. Der Spaltabfall ist jedoch bereits eingefärbt, was nur dann als Vorteil angesehen werden kann, wenn er auch die gewünschte Farbe aufweist.

Lederwaren werden meist aus gestanzten Lederstücken hergestellt. Das Stanzgitter ist jener Teil des Leders, der beim Stanzen übrig bleibt oder unverwertbar ist, weil er beispielsweise Narbenfehler aufweist. Das Stanzgitter ist demnach bereits fertig gegerbt, enthält jedoch auch eine (Polymer-)Zurichtung, das heißt Beschichtung.

Um Narbenfehler auszugleichen, werden die Narbenfehler fertig gegerbter Häute mit einem "Leder-Stucco" ausgebessert, abgeschliffen und neu geprägt. Dabei fällt eine Mischung aus Leder und Zurichtmitteln als feiner Staub an. Dieser Schleifstaub ist trocken, und lässt sich als feines Pulver direkt in Rezepturen einmischen. Er enthält jedoch die Polymeranteile des Leder-Stucco. Außerdem ist die Lederfaser bereits zerstört.

Zur Gewinnung der Lederfasern werden die oben genannten Rohstoffe zu rieselfähigen und dosierbaren Schnipseln verkleinert. Dies geschieht beispielsweise in einer langsam rotierenden Schneidmühle mit einem Siebeinsatz von 5 bis 10 mm Lochöffnung. In einem zweiten Arbeitsgang werden die Lederschnipsel und/oder die nachgegerbten Falzspäne in einer Hammermühle mit feinem Lochsiebeinsatz von 1 bis 4 mm Lochöffnung aufgeschlagen. Dabei sollen bevorzugt vereinzelte Lederfasern von 0,2 bis 2 mm entstehen. Die Vereinzelung, Faserlänge und Faserstärke lassen sich unter dem Mikroskop überprüfen. Auch die Faserverzweigungen, das Schüttvolumen sowie der Feuchtigkeitsgehalt kann bereits hier überprüft werden.

Danach wird in einem Mischer das Bindemittel dazugegeben. Als Bindemittel wird ein vorzugsweise thermoplastisches Polymer eingesetzt. Insbesondere kann beispielsweise ein lösliches Polyurethangranulat mit einer Reißdehnung von 600 bis 800 % und einem Elastizitätsmodul von ca. 5 MPa verwendet werden. Dieses kann mit den Fasern und gegebenenfalls einem Lederfett trocken, beispielsweise 3 Minuten in einem Mischer vermischt werden. Danach wird auch das Lösungsmittel beigegeben und beispielsweise 20 Minuten weiter gemischt, bis eine im Wesentlichen homogene Masse entsteht. Als Lösungsmittel kann dabei ein 2-Butanon Verwendung finden.

Gemäß einer möglichen Rezeptur können 2 Teile Lederfasern und 0,2 Teile Lederfettemulsion in einem Innenmischer etwa 3 bis 5 Minuten gemischt werden. Sodann wird 1 Teil Bindemittelgranulat trocken beigegeben und im Innenmischer ca. 1 Minute gemischt. Danach werden 4 Teile Lösungsmittel, zum Beispiel 2-Butanon, beigegeben und im Innenmischer 20 Minuten gemischt, bis das Bindemittelgranulat vollständig gelöst ist und eine im Wesentlichen homogene, streichfähige Masse entsteht. Dabei kann der Mischer leicht beheizt werden. Der Fortschritt des Mischvorgangs kann anhand der vom Mischer aufgenommenen Leistung verfolgt werden.

Im Mischvorgang entsteht eine lösungsmittelhaltige pseudoplastische Masse. Diese erfordert einen Mindestwert an Scherspannung, bevor sie zu fließen anfängt, was als pseudoplastisches Verhalten bezeichnet wird. Weiters wird die Masse flüssiger, je größer das Geschwindigkeitsgefälle in der Masse wird. Umgekehrt erstarrt die Masse bei Wegfall des Geschwindigkeitsgefälles und befindet sich dann wieder im pseudoplastischen Zustand, der einen Mindestwert an Scherspannung erfordert bevor die Masse zu fließen anfängt. Der daraus hergestellte Lederwerkstoff hat daher ein einheitliches Erscheinungsbild und kann auf bekannten Wegen der industriellen Fertigung von Kunststoffteilen in beinahe beliebige Formen gebracht werden.

Die Masse wird nach Überschreiten einer Fließgrenze leicht fließfähig und so beschaffen, dass sie in kleinen Mengen von Hand durch eine Spritze gedrückt werden kann. Diese Masse wird durch einen Extruder zu einem Strang extrudiert. Bei dem Extruder kann es sich beispielsweise um einen 1- oder 2-Schneckenextruder handeln. Der Extruder hat eine Düse mit beispielsweise 2,0 mm Durchmesser, aber auch jeder andere Durchmesser zwischen 0,5 bis 15 mm ist möglich. Insbesondere bei 1,5 mm ergeben sich gute Ergebnisse. Bei anderen Stranggeometrien wird, entsprechend dem bekannten Stand der Technik, der durch die Düse geförderte Volumenstrom, die Düsenlänge und die Verjüngungswinkel des Extrusionskanals an die Fließeigenschaften der Masse angepasst.

Der Masse können noch weitere Stoffe zugemischt werden. Insbesondere ist eine Kombination mit organischen oder anorganischen sowie synthetischen oder natürlichen Fasern denkbar. Auch können zusätzliche oder andere lösliche, thermoplastische und/oder reaktive Bindemittel beigemengt werden.

Aus diesem Strang kann ein Granulat hergestellt werden. Dazu kann der feuchte extrudierte Strang an einem rotierenden Messer vorbeigeführt werden und dabei in 1 bis 20 mm lange Stücke zerkleinert werden. Insbesondere haben sich Längen von 2,5 mm, 10 mm oder 15 mm, für manche Anwendungen auch 5 mm als vorteilhaft erwiesen. Das feuchte Granulat wird aufgefangen, auf Blechen oder Schalen verteilt und in einem Vakuumofen bei 1 mbar und 40°C getrocknet. Das Lösungsmittel wird in einer der Vakuumpumpe nachgeschalteten Kühlfalle kondensiert und damit zurückgewonnen. Das zurückgewonnene Lösungsmittel kann im Mischprozess wieder eingesetzt werden.

Alternativ dazu ist es auch möglich, bereits den extrudierten Strang zu trocknen und dann den trockenen Strang zu granulieren.

Vorstellbar ist auch die Extrusion von Profilen mit Breitschlitzdüsen, Ring-, Rohr- oder Schlauchdüsen. Die lösungsmittelhaltige plastische Masse lässt sich auch beim oder nach dem Extrudieren in einem Walzwerk zu einer Fläche walzen.

Im getrockneten Zustand ist das Halbzeug, das heißt der extrudierte Strang beziehungsweise das Granulat, lager- und transportfähig. Es enthält keine Lösungsmittel, ist wenig entflammbar und lässt sich daher als ungefährliches Gut auch über große Distanzen wirtschaftlich transportieren. Dies stellt einen großen logistischen Vorteil dar. Die Herstellung des Lederwerkstoffs kann von der Herstellung der Lederwerkstücke getrennt werden. Unterschiedliche Produktionskapazitäten können mit Lagern ausgeglichen werden. Zur Lagerung können beispielsweise 20 kg-Säcke dienen.

Das Granulat beziehungsweise der extrudierte Strang kann mit oder ohne Lösungsmittel weiterverarbeitet werden. Mit Lösungsmitteln lässt sich der Werkstoff bei kleineren Drücken plastisch formen, wobei sich die Viskosität und damit die Fließfähigkeit mit der Art und der Menge des eingesetzten Lösungsmittels einstellen lässt. Dazu wird das Granulat beziehungsweise der Strang mit einem Lösungsmittel im gewünschten Verhältnis in ein verschließbares, antistatisches Fass gefüllt und ca. 30 Minuten gerollt, bis das Lösungsmittel gleichmäßig verteilt ist. Beispielsweise kann ein Granulat des Werkstoffs mit 2-Butanon als Lösungsmittel in einem Verhältnis von 1:1 bis 3:4 - je nach gewünschter Formbarkeit - gemischt werden.

Ist der Werkstoff plastifiziert, können zur weiteren Bearbeitung unterschiedlichste Formgebungsverfahren eingesetzt werden, wie zum Beispiel Walzen, Extrudieren, Pressen, Formpressen, Spritzgießen, Modellieren, Schäumen, etc. Beim Spritzguss, insbesondere Kolbenspritzguss oder Schneckenspritzguss, wird das Granulat in eine Spritzgussmaschine eingefüllt und bei Raumtemperatur in eine Form gespritzt. Alternativ wäre es auch möglich, den Werkstoff ohne Lösungsmittel weiterzuverarbeiten. Dabei sollte das Granulat beim Spritzguss auf ca. 50 bis 100 C, bevorzugt etwa 80°C, erhitzt werden. Zu beachten ist, dass die Temperatur so gewählt wird, dass dadurch nicht die Lederfaser beschädigt wird. Die bei einem lösungsmittelfreien Weiterverarbeiten benötigten Drücke sind wesentlich höher als bei der Verarbeitung einer mit einem Lösungsmittel plastifizierten Masse. Das daraus entstehende Extrudat ist daher entsprechend kompakter.

Der Werkstoff kann nach dem Plastifizieren mit einem Extruder wiederum zu einem Strang geformt werden. Auch hier steht die Möglichkeit offen, mittels geeigneter Düsen beispielsweise ein Breitschlitzextrudat herzustellen. Dieses kann in einem Walzenstuhl ausgewalzt und zu "Lederplatten" weiterverarbeitet werden.

Bei einem optionalen Verfahrensschritt kann in einer Heißpresse die Oberfläche von vorgefertigten Teilen mit einer heißen Fläche glattgebügelt werden. Alternativ oder zusätzlich dazu kann in einer Prägepresse oder Prägewalze eine künstliche Ledernarbe oder andere Muster auf die Oberfläche aufgepresst, das heißt geprägt werden. In einem zusätzlichen Verfahrensschritt des Zurichtens kann in einer Sprühanlage eine Schutz- und/oder Farbschicht auf das Lederteil aufgebracht werden.

Aufgrund der thermoplastischen Verarbeitbarkeit lässt sich der Lederwerkstoff auch durch thermisches Tiefziehen oder Prägeformen in eine gewünschte Form bringen. Dazu wird der Werkstoff zuerst zu einem flächigen Material verarbeitet und sodann in entsprechenden Werkzeugen beheizt, in einer Heißpresse beziehungsweise Tiefziehanlage 3-dimensional geformt und abgekühlt. Je nach Dichte und Schaumgrad der Halbzeuge können auch tiefprägende Verfahren eingesetzt werden.

Denkbar ist auch ein High-Frequency-Formen des Lederwerkstoffs, bei welchem der Werkstoff, insbesondere ein Schaum, in einem elektromagnetischen Feld, ähnlich einem Mikrowellenofen, vor dem Verformen innerlich geheizt wird. Dies ist insbesondere aber nicht ausschließlich bei geschäumten Werkstoffen vorteilhaft.

Nicht nur das Halbzeug, sondern auch die aus dem Lederwerkstoff hergestellten Lederwerkstücke sind prägbar. Insbesondere lassen sich durch Gestaltung der Werkzeugoberflächen glatte oder raue Oberflächen herstellen. Die Oberflächen können daher auch nachträglich noch geprägt oder gebügelt werden. Es können auch später noch echtnarbenähnliche Oberflächen hergestellt werden.

Nicht überhitzte Produktionsreste aus der Verarbeitung des Lederwerkstoffs, wie zum Beispiel Randabschnitte, Angussstücke oder Fehlstücke bei Chargenwechseln können bei der Herstellung des Werkstoffgranulats beziehungsweise Werkstoffextrudats dem Mischer zugegeben werden oder alternativ oder zusätzlich direkt beim thermoplastischen Verarbeiten dem Originalgranulat beziehungsweise -extrudat zugesetzt werden. Dadurch kann der Werkstoff rezykliert und damit abfallfrei verarbeitet werden.

Bei der Herstellung eines Lederwerkstückes kann der Lederwerkstoff verwendet werden, wobei wenigstens die Oberfläche des Lederwerkstückes die Eigenschften des Lederwerkstoffes aufweisen kann. Vorzugsweise wird dabei der Lederwerkstoff, insbesondere wenn er in der Form des Granulats vorliegt, in einem Extrusions- oder Spritzgussprozess verarbeitet. Bei diesem Vorgang kann ein Halbteil oder ein Fertigteil erzeugt werden. Durch den Extrusions- oder Spritzgussprozess weist das Lederwerkstück eine Gusshaut auf, wobei die äußerste Schicht glätter und dichter als die darunter liegenden Schichten ist.

Anschließend kann die Oberfläche aufgeraut werden, insbesondere mittels einer Bürste, einem Schleifmittel und/oder abrasiven Teilen in einem Schüttel- oder Rüttelgefäß. Dabei haben sich schnell rotierende Draht- oder Kunststoffbürsten als geeignet gezeigt. Weiters kann das Aufrauhen mit Schleifpapier oder mit einer Schleifscheibe erfolgen. Durch die aufgeraute Oberfläche kann der Eindruck einer Rauhlederoberfläche erreicht werden, welche einen angenehmen und feinen Griff aufweist. Wasser und Feuchtigkeit werden von dem Lederwerkstück verstärkt aufgenommen.

Bei einigen Ausführungsformen des Lederwerkstückes erscheint es vorteilhaft, wenn die Steifigkeit des Lederwerkstückes reduziert wird, wobei das Lederwerkstück, insbesondere nach dem Extrusions- oder Spritzgussprozess, über eine Reihe von Umlenkrollen, insbesondere von glatten oder gewellten Umlenkrollen, geführt wird. Alternativ kann das Lederwerkstück über eine Kante oder Klinge gezogen werden, was dem in Gerbereien als Stollen bezeichneten Prozess entspricht. Gemäß einer weiteren Alternative kann das Lederwerkstück auch trocken in einer Trommel gewalkt werden, was dem in Gerbereien als Millen bezeichneten Prozess entspricht. Es können auch verschiedene Verfahren miteinander kombiniert werden, um die Steifigkeit des Lederwerkstückes zu reduzieren. Durch die Reduzierung der Steifigkeit wird insbesondere die Biegesteifigkeit reduziert, welche beispielsweise mit einem 3-Punkt Biegeversuch gemessen werden kann. Vorzugsweise bei flächigen Lederwerkstücken kann dadurch ein weicherer Griff und eine bessere Verformbarkeit erzielt werden. Beispielsweise können bei einer Folie enge Krümmungsradien realisiert werden. Dies erscheint insbesondere bei der Herstellung von Bezügen vorteilhaft. Bei anderen Ausführungsformen kann vorgesehen sein, dass bei der Herstellung des Lederwerkstückes eine Einlageform mit dem Extrudat umspritzt wird. Die Einlageform kann in das Lederwerkstück eingebettet sein, wodurch der Materialbedarf an Lederwerkstoff gering gehalten wird. Weiters kann mit der Einlageform die physikalischen Eigenschaften des Lederwerkstückes verändert werden, beispielsweise eine hohe Stabilität erreicht werden. Mit der Einlageform kann ein Grundgerüst eines dreidimensionalen Lederwerkstückes bereitgestellt werden.

Weiters kann der Lederwerkstoff in dem Extrusions- oder Spritzgussprozess mit einem weiteren Kunststoff kombiniert verarbeitet werden. Bei dem Lederwerkstück kann der Lederwerkstoff und der weitere Kunststoff dann in unterschiedlichen Lagen und/oder in unterschiedlichen Bereichen ausgebildet sein. Dabei lassen sich die Eigenschaften des Lederwerkstückes an eine Vielzahl an Anwendungserfordernisse anpassen.

Bei der Herstellung des Lederwerkstückes können in dem Extrudat und/oder neben dem Extrudat hydrophobierende Bestandteile hinzugefügt werden. Mit den hydrophobierenden Bestandteilen kann die Wasseraufnahmeneigung des Lederwerkstückes beeinflusst und an einen vorgebbaren Verwendungszweck angepasst werden.

Es kann auch vorgesehen werden, dass das Lederwerkstück auf wenigstens einer Seite mit hydrophobierenden Mitteln beschichtet und/oder imprägniert wird, wodurch wenigstens eine Seite auf einfache Weise wasserabweisend ausgebildet werden kann.

Auf diese Weise können einfach dreidimensional geformte Lederwerkstücke ausgebildet werden, welche Membraneigenschaften aufweisen, wobei die Membraneigenschaften bereichsweise unterschiedlich ausgebildet werden können.

Insbesondere mit einem Extrusions- oder Spritzgussprozess können unmittelbar dreidimensionale Lederwerkstücke ausgebildet werden, wobei diese nicht aus einem Folienelement, wie dies bei einer Tierhaut der Fall ist, gebildet werden müssen. Weiters kann das Lederwerkstück eine Einlageform umfassen, mit welcher das Lederwerkstück an eine große Zahl an Anwendungsbedingungen angepasst werden kann. Insbesondere kann die Festigkeit und Formstabilität mit der Einlageform beeinflusst werden.

Das Lederwerkstück kann beispielsweise eine Schuhkappe sein, welche außen wasserabweisend ist und damit Regen- und Straßenwasser abweist, innen jedoch die Feuchtigkeit der Füße gut aufnimmt. Weiters können beispielsweise Schuh-Innensohlen ausgebildet werden, welche die Form eines Fußbettes aufweisen und sich besonders gut und dauerhaft und gegebenenfalls wasserdicht mit der Schuhsole verbinden lassen.

Für den Fachmann ist ersichtlich, dass das Lederwerkstück anstelle von Schuhen bei einer Vielzahl weiterer Anwendungen verwendet werden kann.

Der Lederwerkstoff kann im Wesentlichen bei allen bekannten Anwendungen von thermoplastischen Elastomeren verwendet werden und diese ersetzen. Beispielsweise können bei Schreibgeräten die Griffelemente aus dem Lederwerkstoff gebildet werden.

## Patentansprüche

1. Lederwerkstoff umfassend Fasern von Ausgangs-, End- Zwischen- und/oder Nebenprodukten der Ledererzeugung, sowie ein Bindemittel, wobei der Werkstoff als im Wesentlichen lösungsmittelfreies, als Halbzeug ausgebildetes Extrudat vorliegt, und wobei das Bindemittel ein thermoplastisches Polymer ist, wobei das Extrudat als strangförmiges Endlosprodukt, welcher Strang einen Durchmesser von 0,5 bis 15 mm aufweist, oder als Granulat, welches kurze Stücke mit einer Länge von 1 bis 20 mm aufweist, vorliegt, wobei die Fasern thermisch unbelastet sind.

2. Lederwerkstoff nach Anspruch 1, **dadurch gekennzeichnet, dass** die Ausgangs-. End-Zwischen- und/oder Nebenprodukten der Ledererzeugung Falzspäne, Spaltabfälle, Stanzgitter und/oder Schleifstaub sind.

3. Lederwerkstoff nach einem der vorhergehenden Ansprüche, **dadurch gekennzeichnet, dass** das Bindemittel ein Polyurethan ist.

4. Lederwerkstoff nach einem der vorhergehenden Ansprüche, **dadurch gekennzeichnet, dass** die Fasern eine Länge von 0,1 bis 20 mm, vorzugsweise von 2 bis 10 mm, insbesondere 5 mm aufweisen.

5. Lederwerkstoff nach einem der vorhergehenden Ansprüche, **dadurch gekennzeichnet, dass** der Werkstoff weitere Stoffe, insbesondere einen Weichmacher, ein Formentrennmittel, eine Fettemulsion, ein Pigment, einen Füllstoff, ein Blähmittel, einen Stabilisator, einen Farbstoff, einen Duftstoff, ein Hydrophobierungsmittel, eine ölabweisende Komponente, eine schmutzabweisende Komponente und/oder eine bakterizide Substanz enthält.

6. Verfahren zur Verarbeitung von Lederbestandteilen, wobei im gesamten Verfahren eine Temperatur von 120°C nicht überschritten wird **gekennzeichnet durch** die Schritte:
- Bilden von Fasern aus den Lederbestandteilen,
- Beimengen von zumindest einem Bindemittel, wobei als Bindemittel ein thermoplastisches Polymer verwendet wird,
- Beimengen von zumindest einem Lösungsmittel zum Lösen des Bindemittels,
- Extrudieren des Gemisches **durch** einen Extruder zu einem Strang von 0,5 bis 15 mm Durchmesser,
- Entfernen des Lösungsmittels.

7. Verfahren nach Anspruch 6, **dadurch gekennzeichnet, dass** als Lederbestandteile Ausgangs-, End- Zwischen- und/oder Nebenprodukten der Ledererzeugung, insbesondere Falzspäne, Spaltabfälle, Stanzgitter und/oder Schleifstaub, verwendet werden.

8. Verfahren nach Anspruch 6 oder 7, **dadurch gekennzeichnet, dass** - in dem Verfahrensschritt des Extrudierens des Gemisches durch einen Extruder - das Gemisch durch einen Schneckenextruder oder einen Kolbenextruder, insbesondere zu einem Strang von 1 bis 5 mm, insbesondere 1,5 mm Durchmesser, extrudiert wird.

9. Verfahren nach einem der Ansprüche 6 bis 8, **dadurch gekennzeichnet, dass** - in dem Verfahrensschritt des Bildens von Fasern aus den Lederbestandteilen - Fasern mit einer Länge von 0,1 bis 20 mm, vorzugsweise von 2 bis 10 mm, insbesondere 5 mm gebildet werden.

10. Verfahren nach einem der Ansprüche 6 bis 9, **dadurch gekennzeichnet, dass** - in dem Verfahrensschritt des Beimengens von zumindest einem Bindemittel - das Bindemittel trocken, beispielsweise als Granulat oder Pulver, vorliegt und mit den Fasern aus den Lederbestandteilen trocken vermischt wird.

11. Verfahren nach einem der Ansprüche 6 bis 10, **dadurch gekennzeichnet, dass** - in dem Verfahrensschritt des Beimengens von zumindest einem Lösungsmittel - das Bindemittel vollständig gelöst wird, so dass dabei eine im Wesentlichen homogene Masse gebildet wird.

12. Verfahren nach einem der Ansprüche 6 bis 11, **dadurch gekennzeichnet, dass** - vor, nach oder während des Verfahrensschritts des Entfernens des Lösungsmittels - das Extrudat granuliert wird.

13. Verfahren nach einem der Ansprüche 6 bis 12, **dadurch gekennzeichnet, dass** dem Gemisch vor dem Extrudieren weitere Stoffe, insbesondere ein Weichmacher, ein Formentrennmittel, eine Fettemulsion, ein Pigment, ein Füllstoff, ein Blähmittel, ein Stabilisator, ein Farbstoff und/oder ein Duftstoff, beigemengt werden.

14. Verfahren nach einem der Ansprüche 6 bis 13, **dadurch gekennzeichnet, dass** zumindest ein Verfahrensschritt des Verfahrens, insbesondere das Extrudieren des Gemisches, bei einer Temperatur zwischen 10°C und 120°C, vorzugsweise zwischen 50°C und 100°C, durchgeführt wird.

15. Verfahren zur Herstellung eines Lederwerkstückes, **dadurch gekennzeichnet, dass** ein Lederwerkstoff nach einem der Ansprüche 1 bis 5 verwendet wird, und dass der Lederwerkstoff in einem Extrusions- oder Spritzgussprozess verarbeitet wird und anschließend die Oberfläche aufgeraut wird, insbesondere mittels einer Bürste, einem Schleifmittel und/oder abrasiven Teilen in einem Schüttel- oder Rüttelgefäß.

## Claims

1. A leather material, comprising fibers made of starting, end, intermediate and/or by-products of leather manufacturing as well as a bonding agent, the material preferably being available as a substantially solvent-free extrudate that is arranged as a semifinished product, and the bonding agent being a thermoplastic polymer, with the extrudate being present as a strand-like endless product, which strand has a diameter of 0.5 5 to 15 mm, or as a granulate having short pieces with a length of 1 to 20 mm, wherein the fibers are free from thermal stresses.

2. A leather material according to claim 1, **characterized in that** the starting, end, intermediate and/or by-products of leather manufacturing are shavings, splitting waste, punch scrap, and/or suede crock.

3. A leather material according to one of the preceding claims, **characterized in that** the bonding agent is a polyurethane.

4. A leather material according to one of the preceding claims, **characterized in that** the fibers have a length of 0.1 to 20 mm, preferably of 2 to 10 mm, especially 5 mm.

5. A leather material according to one of the preceding claims, **characterized in that** the material contains further substances, especially a softening agent, a parting agent, a fat emulsion, a pigment, a filler, a foaming agent, a stabilizer, a dye, a fragrance, a hydrophobing agent, an oil-repellent component, a dirt-repellent component and/or a bactericidal component.

6. A method for processing leather components, with a temperature of 120°C not being exceeded in the entire process, **characterized by** the following steps:
- forming of fibers from the leather components;
- admixing at least one bonding agent, with a thermoplastic polymer being used as the bonding agent;
- admixing at least one solvent for dissolving the bonding agent;
- extruding the mixture through an extruder into a strand of a diameter of 0.5 to 15 mm;
- removing the solvent.

7. A method according to claim 6, **characterized in that** starting, end, intermediate and/or by-products of leather manufacturing, especially shavings, splitting waste, punch scrap, and/or suede crock are used as leather components.

8. A method according to claim 6 or 7, **characterized in that** in the method step of the extrusion of the mixture through an extruder the mixture is extruded through a screw extruder or piston extruder, especially into a strand with a diameter of 1 to 5 mm, especially 1.5 mm

9. A method according to one of the claims 6 to 8, **characterized in that** in the method step for forming fibers from the leather components the fibers are formed with a length of 0.1 to 20 mm, preferably 2 to 10 mm, especially 5 mm

10. A method according to one of the claims 6 to 9, **characterized in that** in the method step of admixing at least one bonding agent the bonding agent is present in a dry state, e.g. as a granulate or powder, and is mixed dry with the fibers from the leather components.

11. A method according to one of the claims 6 to 10, **characterized in that** in the method step of admixing at least one solvent the bonding agent is dissolved completely, so that a substantially homogeneous compound is formed.

12. A method according to one of the claims 6 to 11, **characterized in that** the extrudate is granulated before, after or during the method step of the removal of the solvent.

13. A method according to one of the claims 6 to 12, **characterized in that** further substances such as a softening agent, a parting agent, a fat emulsion, a pigment, a filler, a foaming agent, a stabilizer, a dye and/or a fragrance is admixed to the mixture before the extrusion.

14. A method according to one of the claims 6 to 13, **characterized in that** at least one method step of the method, especially the extrusion of the mixture, is carried out at a temperature of between 10°C and 120°C, preferably between 50°C and 100°C.

15. A method for producing a leather product, **characterized in that** a leather material is used according to one of the claims 1 to 5, and that the leather material is processed in an extrusion or injection molding process, and subsequently the surface is roughened, especially by means of a brush, a grinding means and/or abrasive parts in a shaking or vibrating vessel.

## Revendications

1. Matériau à base de cuir contenant des fibres de matières premières, de produits finis, de produits intermédiaires ou de sous-produits de la production de cuir ainsi qu'un liant, dans lequel le matériau se présente sous la forme d'un extrudat sensiblement sans solvant, conformé comme un semi-produit, et dans lequel le liant est un polymère thermoplastique, l'extrudat se présentant comme un produit sans fin en forme de barre, laquelle barre présente un diamètre de 0,5 à 15 mm, ou sous forme de granulés présentant des morceaux courts d'une longueur de 1 à 20 mm, dans lequel les fibres ne sont pas soumises à une contrainte thermique.

2. Matériau à base de cuir selon la revendication 1, **caractérisé en ce que** les matières premières, produits finis, produits intermédiaires et/ou sous-produits de la production de cuir sont des copeaux de pliage, des déchets de refente, des chutes de découpe à l'emporte-pièce et/ou de la poussière de ponçage.

3. Matériau à base de cuir selon l'une des revendications précédentes, **caractérisé en ce que** le liant est un polyuréthane.

4. Matériau à base de cuir selon l'une des revendications précédentes, **caractérisé en ce que** les fibres présentent une longueur de 0,1 à 20 mm, de préférence de 2 à 10 mm, en particulier de 5 mm

5. Matériau à base de cuir selon l'une des revendications précédentes, **caractérisé en ce que** le matériau contient d'autres substances, en particulier un plastifiant, un agent de démoulage, une émulsion de graisse, un pigment, une charge, un agent gonflant, un stabilisant, un colorant, un parfum, un agent hydrophobisant, un composant antitaches et/ou une substance bactéricide.

6. Procédé pour la mise en oeuvre de composants du cuir dans lequel une température de 120°C n'est pas dépassée pendant tout le procédé, **caractérisé en ce qu'**il comprend les étapes suivantes :
- formation de fibres à partir des composants du cuir,
- ajout d'au moins un liant, le liant utilisé étant un polymère thermoplastique,
- ajout d'au moins un solvant pour dissoudre le liant,
- extrusion du mélange à travers une extrudeuse pour obtenir une barre de 0,5 à 15 mm de diamètre,
- élimination du solvant.

7. Procédé selon la revendication 6, **caractérisé en ce que** les composants du cuir utilisés sont des matières premières, produits finis, produits intermédiaires et/ou sous-produits de la production de cuir, en particulier des copeaux de pliage, des déchets de refente, des chutes de découpe à l'emporte-pièce et/ou de la poussière de ponçage.

8. Procédé selon la revendication 6 ou 7, **caractérisé en ce que** dans l'étape d'extrusion du mélange à travers une extrudeuse, le mélange est extrudé à travers une extrudeuse à vis sans fin ou une extrudeuse à piston, en particulier pour former une barre de 1 à 5 mm, en particulier de 1,5 mm de diamètre.

9. Procédé selon l'une des revendications 6 à 8, **caractérisé en ce que** dans l'étape de formation de fibres à partir des composants du cuir, des fibres d'une longueur de 0,1 à 20 mm, de préférence de 2 à 10 mm, en particulier de 5 mm, sont formées.

10. Procédé selon l'une des revendications 6 à 9, **caractérisé en ce que** dans l'étape d'ajout d'au moins un liant, le liant se présente sous forme sèche, par exemple sous forme de granulés ou de poudre, et est mélangé à sec avec les fibres de composants du cuir.

11. Procédé selon l'une des revendications 6 à 10, **caractérisé en ce que** dans l'étape d'ajout d'au moins un solvant, le solvant est complètement dissous, de façon à former ainsi une masse sensiblement homogène.

12. Procédé selon l'une des revendications 6 à 11, caractérisé en ce l'extrudat est granulé avant, pendant ou après l'étape d'élimination du solvant.

13. Procédé selon l'une des revendications 6 à 12, **caractérisé en ce que** le mélange est additionné avant l'extrusion d'autres substances, en particulier d'un plastifiant, d'un agent de démoulage, d'une émulsion de graisse, d'un pigment, d'une charge, d'un agent gonflant, d'un stabilisant, d'un colorant et/ou d'un parfum.

14. Procédé selon l'une des revendications 6 à 13, **caractérisé en ce qu'**au moins une étape du procédé, en particulier l'extrusion du mélange, est exécutée à une température comprise entre 10°C et 120°C, de préférence entre 50°C et 100°C.

15. Procédé pour la fabrication d'une pièce d'oeuvre en cuir, **caractérisé en ce qu'**un matériau à base de cuir selon l'une des revendications 1 à 5 est utilisé et **en ce que** le matériau à base de cuir est mis en oeuvre dans un procédé d'extrusion ou de moulage par injection et la surface est ensuite rendue rugueuse, en particulier au moyen d'une brosse, d'un abrasif et/ou de pièces abrasives dans un tambour agitateur ou vibrant.
